(19) Europäisches Patentamt / European Patent Office / Office européen des brevets

(11) **EP 2 252 788 B1**

(12) **FASCICULE DE BREVET EUROPEEN**

(45) Date de publication et mention de la délivrance du brevet:
**11.07.2018 Bulletin 2018/28**

(21) Numéro de dépôt: **09723112.0**

(22) Date de dépôt: **04.03.2009**

(51) Int Cl.:
*F03B 3/02* (2006.01)     *F03B 11/04* (2006.01)
*F03B 11/00* (2006.01)

(86) Numéro de dépôt international:
**PCT/FR2009/050348**

(87) Numéro de publication internationale:
**WO 2009/115729 (24.09.2009 Gazette 2009/39)**

(54) **ROUE FRANCIS DE TURBINE HYDRAULIQUE ÉQUIPÉE D'UN ORGANE FORMANT POINTE ET PROCÉDÉ DE RÉDUCTION DES FLUCTUATIONS UTILISANT UNE TELLE ROUE**

LAUFRAD EINER FRANCIS TURBINE MIT EINER SPEZIELLEN KRONENSPITZE UND VERFAHREN ZUR REDUZIERUNG VON STRÖMUNGSSCHWANKUNGEN MIT HILFE DIESES LAUFRADES

FRANCIS-TYPE HYDRAULIC TURBINE WHEEL EQUIPPED WITH A TIP-FORMING MEMBER, AND METHOD OF REDUCING FLUCTUATIONS USING SUCH A WHEEL

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **05.03.2008 FR 0851430**

(43) Date de publication de la demande:
**24.11.2010 Bulletin 2010/47**

(73) Titulaire: **GE Renewable Technologies**
**38100 Grenoble (FR)**

(72) Inventeurs:
• **MAZZOUJI, Farid**
  **F-38210 Vourey (FR)**
• **BAZIN, Danièle**
  **F-38500 Voiron (FR)**

• **COUSTON, Michel**
  **F-38180 Seyssins (FR)**
• **BERAL, Claude**
  **F-38113 Veurey Voroize (FR)**
• **BREMOND, Jacques**
  **F-38120 Saint-egreve (FR)**

(74) Mandataire: **Brannen, Joseph Waclaw et al**
**Global Patent Operation - Europe**
**GE International Inc.**
**The Ark**
**201 Talgarth Road**
**Hammersmith**
**London W6 8BJ (GB)**

(56) Documents cités:
FR-A- 1 162 872     FR-A- 1 203 142
FR-A- 2 300 909     JP-A- 4 072 468
US-A- 2 507 796

**Description**

La présente invention a trait à une roue Francis de machine hydraulique équipée d'un organe formant pointe qui prolonge globalement le plafond de la roue. L'invention a également trait à un procédé de réduction des fluctuations dans un écoulement interagissant avec une telle roue.

Dans le domaine des turbines hydrauliques, notamment des turbines Francis, il est connu d'équiper la partie aval du plafond d'une roue avec un organe axisymétrique, souvent dénommé « pointe », dont la surface externe prolonge sensiblement la surface mouillée du plafond de la roue avec un diamètre qui peut aller en diminuant vers l'aval. Cet organe ou « pointe » prolonge le guidage de l'écoulement jusqu'à proximité de l'axe de rotation de la roue. De la même manière, il est connu d'utiliser des organes ou pointes de guidage dans les turbines-pompes et les autres turbines à pales.

Dans les turbines hydrauliques connues, l'écoulement traversant la roue peut donner naissance à des tourbillons ou turbulences, généralement qualifiés de « torches » et qui, à certaines charges, sont en forme de « tire-bouchon ». Ces turbulences en torche sont gênantes dans la mesure où elles provoquent des fluctuations de pression et/de puissance qui peuvent nuire à la stabilité du réseau qu'alimente la machine, ainsi qu'aux performances mécaniques de cette machine.

Il est connu de WO-A-2005/038243 d'utiliser une pointe comprenant deux surfaces, respectivement convergente et divergente en direction d'un axe de rotation de la roue, ce qui permet de limiter dans une large mesure les turbulences. Toutefois, à certains régimes, des turbulences demeurent et la présente invention considère une solution alternative permettant de supprimer ou de réduire fortement ces turbulences.

Il est également connu de US-A-2758815 de former dans une pointe des perçages de petit diamètre permettant une recirculation, à l'intérieur d'une pointe de roue Francis, du bas vers le haut pour une roue Francis à axe vertical. Une quantité d'eau sort de la pointe à travers ces ouvertures de façon à constituer des jets rabattus vers l'aval par l'écoulement principal transitant dans la turbine, ceci afin de former autour de la pointe une zone d'écoulement mélangé qui constitue un anneau de courant enveloppant la section méridienne de la pointe. Ce type de fonctionnement n'est pas toujours efficace dans la mesure où l'effet de "pompage" dû à la pointe ne peut pas être garanti.

JP-A-04 072468 enseigne d'utiliser une pointe de roue mobile en hauteur et pourvue d'ailettes internes disposées à distance de son bord inférieur. Ces ailettes ne sont pas efficaces pour éviter la création de torches turbulentes dans une zone centrale en sortie de roue.

Il est également connu de FR-A-1 162 872 de disposer, en dessous d'une pointe de roue conique, un tube cylindrique, sans que l'on sache précisément comment l'eau circule à l'intérieur et autour de ce tube. Ce tube vise à guider l'eau après son passage dans la roue, de sorte qu'il doit faire saillie, sur une hauteur importante, dans le conduit d'aspiration de l'installation. Le tube limite le volume de passage de l'écoulement principal en sortie de roue, ce qui augmente la vitesse de cet écoulement et, par voie de conséquence, les pertes de rendement. Des nervures relient mécaniquement le tube à la pointe conique, sans que leur influence sur le trajet de l'écoulement soit quantifiée. En outre, le tube suspendu à la pointe augmente sensiblement l'encombrement global de la roue, ce qui pose des difficultés pour la mise en place la roue sur son site d'exploitation.

C'est à ces inconvénients qu'entend plus particulièrement remédier l'invention en proposant une nouvelle roue de type Francis qui peut équiper une turbine ou une turbine-pompe, et dans laquelle les turbulences en sortie de la turbine sont minimisées et les pertes de rendement ne sont pas augmentées du fait de l'utilisation de cet organe.

A cet effet, l'invention concerne une roue de type Francis pour une turbine ou une turbine-pompe hydraulique, selon la revendication 1, cette roue comprenant plusieurs aubes disposées sur un plafond et étant équipée d'un organe formant pointe rapporté sur une zone centrale du plafond ou du moyeu de la roue, radialement à l'intérieur des aubes, alors que le plafond définit une surface mouillée de guidage d'un écoulement passant entre les aubes et que l'organe formant pointe est pourvu d'au moins une ouverture de déviation d'une partie de l'écoulement qui passe entre les aubes vers le volume interne de cet organe. L'organe formant pointe comprend une jupe annulaire tronconique, qui entoure le volume interne de l'organe vers lequel est déviée la partie de l'écoulement. Au moins une ailette est disposée dans le volume interne de l'organe. Cette roue est caractérisée en ce que l'ailette s'étend jusqu'au bord de la jupe qui délimite une ouverture de sortie de l'organe pour la partie d'écoulement déviée vers le volume interne et en ce que l'ailette est apte à modifier le trajet de la partie d'écoulement pénétrant dans ce volume interne par la ou les ouvertures de déviation de l'écoulement.

Grâce à l'invention, il est possible de diriger, à travers l'ouverture de déviation de l'écoulement, une partie de l'écoulement qui interagit avec la roue vers l'intérieur de l'organe ou pointe, ce qui permet de rediriger cette partie d'écoulement vers une zone centrale de la turbine dans laquelle ont tendance à se former des torches ou turbulences. En d'autres termes, lorsqu'il est monté sur une roue de turbine Francis, l'organe formant pointe permet d'injecter dans une zone centrale de la machine une quantité d'eau qui n'est pas au même régime que l'écoulement principal, cette injection permettant de « combler » la zone dans laquelle ont tendance à se développer des turbulences. La ou les ailettes modifient effectivement le trajet de la partie de l'écoulement qui pénètre dans le volume interne de l'organe en agissant sur celui-ci jusqu'au voisinage immédiat de l'ouverture de sortie, car ces ailettes se prolongent jusqu'au bord inférieur de la jupe qui délimite cette ouverture. L'action conjuguée des ailettes et de la jupe sur cette partie d'écoulement permet que la hauteur de la jupe, prise parallèlement à l'axe de rotation de la roue, peut être relativement faible, au point que l'organe peut ne pas dépasser en deçà du bord inférieur de la ceinture de la roue, dans le tube d'aspiration. L'écoulement principal d'eau n'est donc pas perturbé de façon significative et le rendement de la turbine n'est pas diminué de façon gênante. La géométrie de l'organe assure également que l'écoulement secondaire sortant de cet organe peut être sensiblement axial et agit efficacement sur les turbulences ou les tourbillons qui ont tendance à se former au voisinage de l'axe de rotation de la roue, en aval de celle-ci.

L'invention concerne enfin un procédé selon la revendication 18 de réduction des fluctuations dans un écoulement qui interagit avec une roue de machine hydraulique. Selon ce procédé, on fait pénétrer une partie de cet écoulement dans le volume interne d'un organe formant pointe et appartenant à une roue telle que mentionnée ci-dessus, à travers la ou les ouvertures de déviation d'écoulement précitées, on modifie le trajet de la partie de l'écoulement grâce aux ailettes de l'organe et on fait sortir cette partie d'écoulement de cet organe à travers une ouverture axiale, de telle sorte que cette partie d'écoulement est dirigée, en sortie de cet organe, à l'intérieur d'un volume globalement cylindrique d'axe parallèle à l'axe de rotation de la roue.

L'invention sera mieux comprise et d'autres avantages de celle-ci apparaîtront plus clairement à la lumière de la description qui va suivre de trois modes de réalisation d'un organe conforme à l'invention et de deux modes de réalisation d'une roue Francis conforme à l'invention, donnés uniquement à titre d'exemples et faits en référence aux dessins annexés dans lesquels :

- La figure 1 est une coupe axiale d'une roue de turbine conforme à l'invention ;

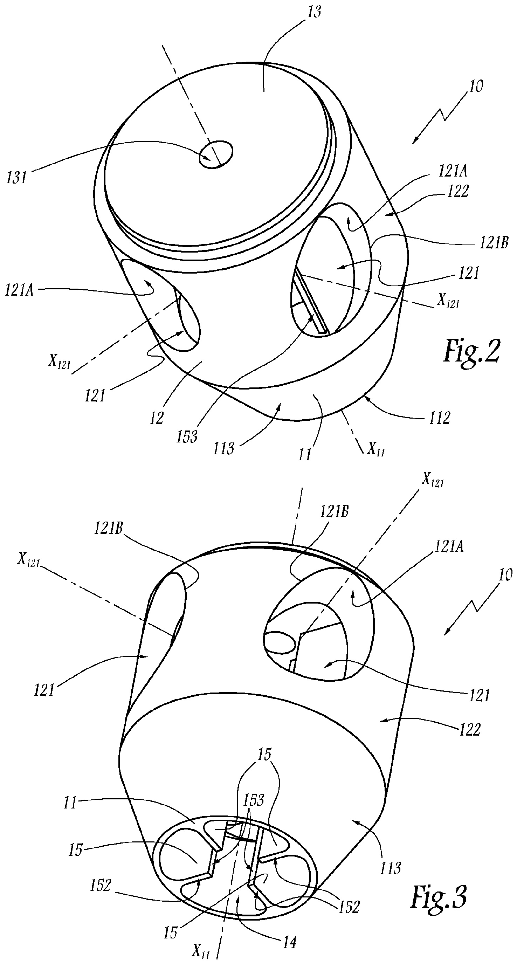

- La figure 2 est une vue en perspective, à plus grande échelle, de la pointe de la roue de la figure 1 ;
- La figure 3 est une vue en perspective de la pointe de la figure 2, selon un autre angle ;
- La figure 4 est une vue de dessus, à plus petite échelle, de la pointe des figures 2 et 3, sur laquelle la ligne I-I représente le plan de coupe de la pointe à la figure 1 ;
- La figure 5 est une demi-coupe selon la coupe V-V à la figure 4 ;
- La figure 6 est une vue dans le sens de la flèche VI à la figure 4 ;
- La figure 7 est une coupe selon la ligne VII-VII à la figure 6 ;
- La figure 8 est une coupe analogue à la figure 7 pour une pointe conforme à un deuxième mode de réalisation ;
- La figure 9 est une coupe axiale d'une deuxième roue de turbine conforme à l'invention équipée d'une pointe conforme à un troisième mode de réalisation ;
- La figure 10 est une vue en perspective de la pointe de la roue de la figure 9 ;
- La figure 11 est une vue de dessus de l'organe de la figure 10 et
- La figure 12 est une coupe selon la ligne XII-XII à la figure 11.

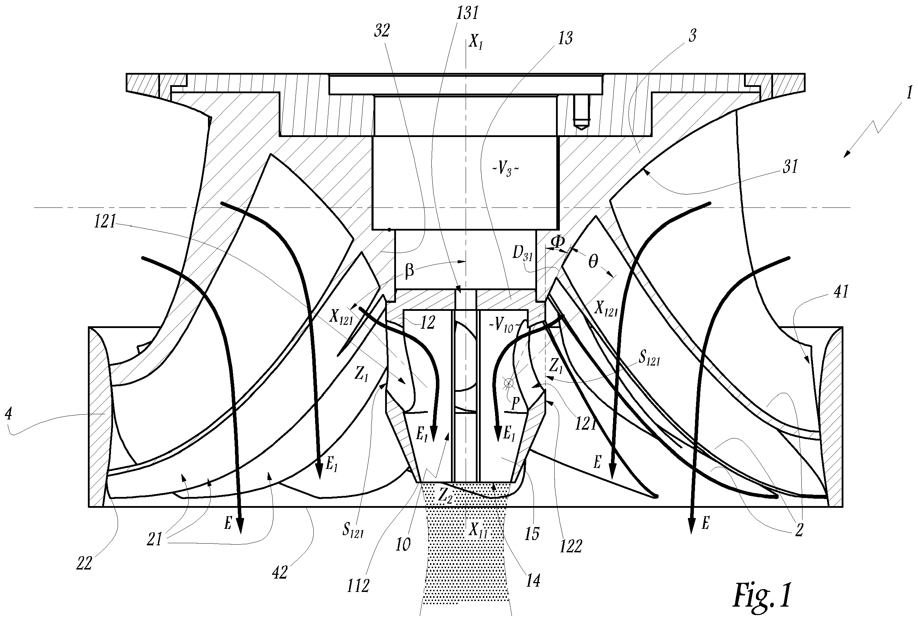

La roue de turbine Francis 1 représentée à la figure 1 comprend des aubes 2 régulièrement réparties autour d'un axe central $X_1$ de rotation de la roue 1. Un plafond 3 est prévu en partie supérieure et radiale interne de la roue 1, alors qu'une ceinture 4 borde les parties inférieures radiales et externes des aubes 2. Un conduit d'écoulement est créé entre chaque paire de deux aubes 2 adjacentes, ce conduit étant délimité par une surface mouillée 31 du plafond 3 et une surface mouillée 41 de la ceinture 4. Un écoulement E peut ainsi traverser la roue 1 pour la mettre en rotation autour de l'axe $X_1$, en agissant sur les aubes 2 de la roue, afin d'entraîner un arbre non représenté reliant la roue 1 à un organe de conversion d'énergie tel qu'un alternateur, également non représenté.

Un organe 10 formant une « pointe » est monté sur la partie aval 32 du plafond 3. Cet organe obture partiellement l'accès par l'aval au volume interne $V_3$ de ce plafond 3, ce volume devant généralement demeurer, avant mise en place de l'organe 10, accessible pour le montage de la roue 1 notamment pour son accrochage sur l'arbre précité.

L'organe ou pointe 10 comprend une jupe 11 centrée sur un axe $X_{11}$ qui constitue également un axe central de l'organe 10. Les axes $X_1$ et $X_{11}$ sont confondus lorsque la pointe 10 est montée sur la roue 1. En pratique, la jupe 11 est tronconique et à symétrie de révolution autour de l'axe $X_{11}$.

Dans la présente description, les termes « haut » et « bas », « supérieur » et « inférieur » correspondent à l'orientation des parties de la roue 1 lorsque celle-ci est configuration d'utilisation dans une turbine ou une turbine-pompe à axe vertical. Ainsi, une partie « supérieure » est située au-dessus d'une partie « inférieure ».

La jupe 11 se prolonge vers le haut par une paroi cylindrique 12 à section circulaire qui jouxte un plafond 13, lequel obture vers le haut le volume intérieur $V_{10}$ de la pointe 10. Les éléments 11, 12 et 13 sont monoblocs et réalisés en métal, par exemple en acier, ou en matériau composite.

En variante, la paroi 12 pourrait être conique et convergente ou divergente vers le bas.

Le plafond 13 est percé d'une ouverture 131 de passage d'un moyen de fixation non représenté sur le plafond 3 de la roue 1. Ce moyen de fixation est avantageusement en forme de boulon ou équivalent. Selon un aspect de l'invention qui n'est pas représenté, le plafond 13 peut être percé d'un ou plusieurs orifices de passage d'air ou d'accès à la boulonnerie d'accouplement de la roue 1 sur son arbre.

La paroi 12 est percée de quatre ouvertures 121 qui permettent de dévier une partie de l'écoulement E vers le volume intérieur $V_{10}$ de la pointe 10. On note 121A le bord d'une ouverture 121 et 121B l'arête de jonction entre ce bord et la surface radiale externe 122 de la paroi 12. Le bord 121A est défini par l'intersection de la paroi 12 et d'un cylindre imaginaire. En variante, ce bord 121A peut être défini par l'intersection de la paroi 12 avec un cône imaginaire.

On note $X_{121}$ l'axe central d'une ouverture 121, c'est-à-dire un axe passant par le barycentre géométrique de l'arête 121B et orienté parallèlement à l'axe du cylindre ou du tronc de cône imaginaire précité.

On note $S_{121}$ la section d'entrée d'une ouverture 121 qui est délimitée par l'arête 121B. Cette section d'entrée est ménagée dans la surface radiale externe 122 de la paroi 12. La trace de la section d'entrée $S_{121}$ de l'ouverture 121 de droite de la figure 1 est représentée par une droite en traits pointillés sur cette figure.

On note par ailleurs $D_{31}$ une droite du plan de la figure 1 qui prolonge la surface mouillée 31 en direction de l'axe $X_1$, c'est-à-dire vers l'aval lorsque la roue fonctionne en tant que partie de turbine. La droite $D_{31}$ est tangente à la surface 31 au voisinage de la partie aval 32 du plafond 3.

On note $\theta$, l'angle entre la droite $D_{31}$ et la projection méridienne de l'axe central $X_{121}$ dans le plan de la figure 1. L'angle $\theta$ est mesuré dans le secteur angulaire délimité par la droite $D_{31}$ et la trace de l'axe $X_{121}$ à la figure 1 radialement à l'extérieur d'un point d'intersection P entre cette droite et cette trace, par rapport à l'axe $X_1$.

Cet angle $\theta$ est aigu, en ce sens qu'il a une valeur strictement inférieure à 90°. En pratique, l'angle $\theta$ a une valeur inférieure à 80°, de préférence inférieure à 60°. Des résultats satisfaisants ont été obtenus avec un angle $\theta$ égal à environ 25°.

Grâce à la position et à l'orientation des axes centraux $X_{121}$ des ouvertures 121 par rapport à la droite $D_{31}$, une partie de l'écoulement E qui longe la surface mouillée 31 s'écoule naturellement vers le volume intérieur $V_{10}$ de l'organe 10.

La surface radiale externe 122 de la paroi n'est pas parallèle à la droite $D_{31}$ à la figure 1, ce qui induit que la trace de la section d'entrée $S_{121}$ d'une ouverture 121 dans le plan de la figure 1 forme un angle $\phi$ non nul avec la droite $D_{31}$.

Compte tenu de la valeur des angles $\theta$ et $\phi$, la section d'entrée $S_{121}$ de chaque ouverture 121 se retrouve sur le trajet d'une portion de l'écoulement E qui lèche la surface 31, de sorte que la déviation d'une partie de cet écoulement E, sous la forme d'un écoulement secondaire $E_1$ vers le volume $V_{10}$, est facilitée et que, ce faisant, le débit de l'écoulement $E_1$ peut être significatif.

Les ouvertures 121 constituent ainsi des ouvertures de déviation d'une partie de l'écoulement E, sous la forme de l'écoulement secondaire $E_1$ vers le volume $V_{10}$.

L'écoulement secondaire $E_1$ est prélevé sur l'écoulement E, en aval du bord de fuite 21 des aubes 2, de telle sorte que cet écoulement $E_1$ peut être considéré comme ayant déjà travaillé à la mise en rotation de la roue 1 par interaction avec les aubes 2. En d'autres termes, le fait que l'écoulement $E_1$ passe dans le volume $V_{10}$ ne diminue pas le rendement global de la roue 1.

Le bord libre 112 de la jupe 11 qui est opposé au plafond 13 délimite une ouverture 14 de sortie de l'organe 10, qui peut être qualifiée de « axiale », en ce sens qu'elle est centrée sur l'axe $X_{11}$, de sorte qu'un écoulement qui la traverse perpendiculairement est globalement parallèle à cet axe. L'ouverture 14 est en forme de disque perpendiculaire à l'axe $X_{11}$.

L'ouverture 14 pourrait être en partie « radiale », en ce sens qu'un écoulement qui la traverserait aurait également une composante radiale.

Le volume intérieur $V_{10}$ de l'organe 10, est le volume radial interne de la jupe 11 qui est obturé, vers le haut, par le plafond 13 et qui est délimitée, du côté du bord 112, par l'ouverture 14.

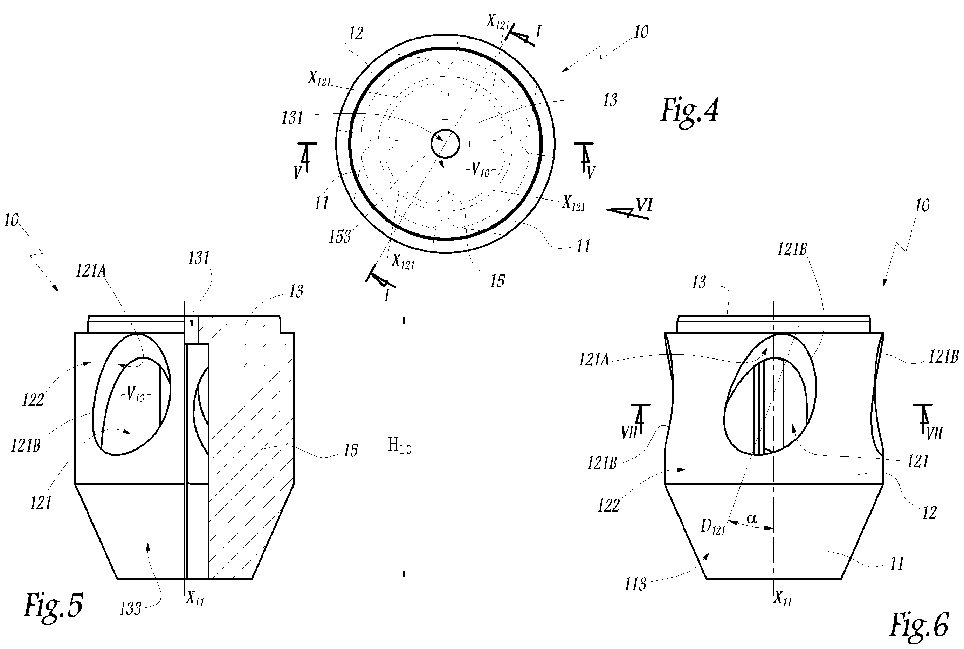

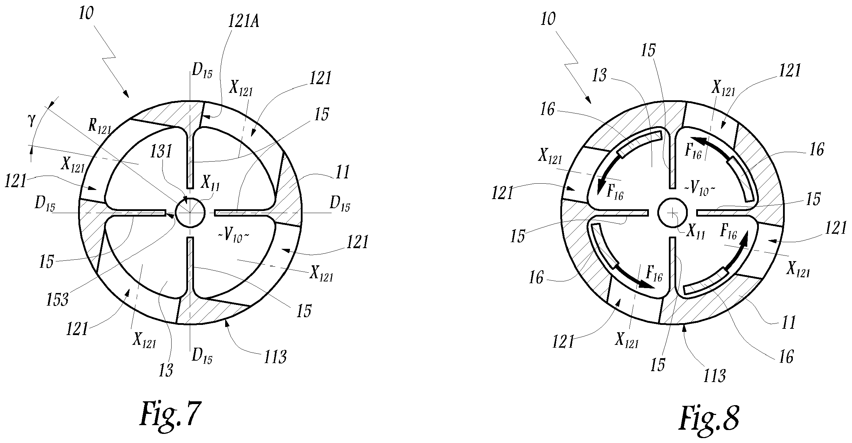

Dans le volume $V_{10}$ sont disposées quatre ailettes 15 régulièrement réparties autour de l'axe $X_{11}$. Chaque ailette 15 est plane et disposée, à l'intérieur du volume $V_{10}$, dans un plan radial par rapport à l'axe $X_1$. En d'autres termes, dans la représentation des figures 4 et 7, chaque ailette 15 s'étend globalement selon une direction $D_{15}$ radiale par rapport à l'axe $X_{11}$.

Chaque ailette 15 relie la jupe 11 au plafond 13 en passant radialement à l'intérieur de la paroi 12.

Chaque ailette 15 s'étend, à partir du plafond 13, jusqu'au niveau du bord 112 où elle se termine par un bord de fuite 152 rectiligne et perpendiculaire à l'axe $X_{11}$. Ce bord s'étend, à partir du bord 112, en direction de l'axe $X_{11}$, c'est-à-dire de l'axe $X_1$ lorsque l'organe 10 est monté sur la roue.

Chaque ailette 15 s'étend, à partir de la jupe 11 et de la paroi 12 et en direction de l'axe $X_{11}$, jusqu'à un bord 153 rectiligne et parallèle à l'axe $X_{11}$. Les bords 153 des différentes ailettes 15 sont distants les uns des autres, de sorte qu'il est ménagé, au centre du volume $V_{10}$, une zone sans organe de déviation de l'écoulement secondaire $E_1$.

Les ailettes 15 sont les seuls organes qui agissent sur l'écoulement $E_1$ à l'intérieur du volume $V_{10}$. En particulier, il n'existe pas de partie conique ou circulaire occupant une zone centrale du volume $V_{10}$, ce qui permet à l'écoulement $E_1$ de circuler également dans cette zone centrale.

On note 113 la surface radiale externe de la jupe 11. La surface 113 prolonge la surface 122 vers le bas et participe au guidage de l'écoulement E vers une partie aval de l'installation à laquelle appartient la roue 1, en particulier un conduit d'aspiration non représenté.

Du fait de la présence des ouvertures 121 dans la paroi 12, une partie de l'écoulement E qui transite entre les aubes 2 et les surfaces 31 et 41 peut pénétrer dans le volume $V_{10}$ comme mentionné précédemment, puis s'écouler selon une direction globalement parallèle à l'axe $X_1$, en sortant de l'organe 10 à travers l'ouverture 14. Les ouvertures 121 permettent donc de mettre en communication une zone $Z_1$, de passage de l'écoulement E au voisinage des surfaces 122 et 113, avec le volume $V_{10}$.

En sortie de l'organe 10, l'écoulement $E_1$ permet de remplir ou « gaver » une zone $Z_2$ proche de l'axe $X_1$, située en aval des aubes 2 de la roue 1 et proche du bord inférieur 42 de la ceinture 4. Cette zone $Z_2$ est représentée en grisé à la figure 1. En sortie de l'organe 10, l'écoulement $E_1$ est dirigé globalement selon une direction parallèle à l'axe $X_1$ avec une composante azimutale. La zone $Z_2$ constitue un volume globalement cylindrique d'axe vertical dans lequel passe l'écoulement $E_1$ en sortie de l'organe 10. L'écoulement $E_1$ comble un déficit d'écoulement qui aurait tendance à se produire dans la zone $Z_2$ et serait propre à générer des turbulences. Comme le débit de l'écoulement $E_1$ est relativement important par rapport à celui de l'écoulement E, du fait de l'orientation relative des axes $X_{121}$ et des droites $D_{31}$ dans le plan de coupe axiale de la figure 1, l'effet de comblement des turbulences dans la zone $Z_2$ est significatif.

Compte tenu de son transit dans le volume interne $V_{10}$ de l'organe 10, notamment de l'action des ailettes 15, l'écoulement $E_1$ a un régime différent de l'écoulement principal E, ce qui améliore l'effet de suppression des turbulences.

Le bord 121A de chaque ouverture 121 est centré sur son axe $X_{121}$ et allongé, avec sa plus grande dimension alignée sur une droite $D_{121}$ qui est inclinée par rapport à la verticale, c'est-à-dire par rapport aux axes $X_1$ et $X_{11}$ en configuration montée de la pointe, d'un angle $\alpha$ égal à 20°. L'angle $\alpha$ est choisi en fonction de la vitesse spécifique de rotation nominale de la roue 1 et sa valeur peut être comprise entre -90° et 90°, de préférence entre -75° et -5° et entre 5° et 75°.

Au sens de la présente invention, la vitesse spécifique de rotation nominale d'une roue est la vitesse de rotation de cette roue si elle devait travailler sous une chute de 1 mètre et avait à fournir une puissance de 1 kilowatt.

En outre, les axes $X_{121}$ des différentes ouvertures 121 sont divergents par rapport à l'axe $X_{11}$ et s'éloignent de celui-ci en se rapprochant du plafond 13. L'angle $\beta$ entre la projection d'un angle $X_{121}$ dans le plan de la figure 1 et l'axe $X_{11}$ est de 45°. Sa valeur est choisie en fonction des conditions d'utilisation de l'organe 10, notamment de la vitesse spécifique de rotation de la roue 1 et de la géométrie du plafond 3. Cette valeur peut être comprise entre 15° et 60°.

Comme il ressort de la figure 7, l'axe $X_{121}$ d'un bord d'ouverture 121 n'est pas purement radial par rapport à l'axe $X_{11}$ mais forme avec un rayon $R_{12}$ passant par le centre d'une ouverture 121, un angle $\gamma$ de 20°. La valeur de l'angle $\gamma$ peut être choisie, en fonction des conditions d'utilisation de l'organe 10, entre 0° et 60°.

Les ailettes 15 sont prévues pour et permettent de modifier le trajet de l'écoulement $E_1$ lorsque cet écoulement pénètre dans le volume $V_{10}$, alors que la roue 1 tourne. La géométrie de ces ailettes peut être adaptée aux conditions d'utilisation de l'organe 10. En particulier, elles ne sont pas nécessairement planes, ni alignées sur un plan radial par rapport à l'axe $X_{11}$, ni fixes.

Lorsque l'écoulement $E_1$ a pénétré dans le volume $V_{10}$ par les ouvertures 12, il est redirigé par les ailettes 15, qui s'étendent sur toute la hauteur de la pointe 10 entre le plafond 13 et le bord 112, vers l'ouverture 14. Ainsi, le trajet de l'écoulement $E_1$ dans le volume $V_{10}$ est modifié par les ailettes 15, qui le guident jusqu'à l'ouverture de sortie 14, pour passer d'une orientation plutôt centripète à une orientation plutôt axiale.

Comme les ailettes s'étendent jusqu'au niveau de l'ouverture 14, la hauteur axiale $H_{10}$ de l'organe 10, qui est prise parallèlement à l'axe $X_{11}$ peut être relativement faible, au point que l'organe 10 ne fait pas saillie dans le conduit d'aspiration d'une turbine Francis équipée de la roue 1. En pratique, le bord 112 est situé au dessus du bord 42 en configuration d'utilisation de la roue 1, c'est-à-dire lorsque l'axe $X_1$ est vertical et la roue installée comme représenté à la figure 1. De préférence, la hauteur $H_{10}$ est telle que le bord 112 est situé au dessus du point d'attache inférieur 22 de chacune des aubes 2 sur la ceinture 4.

Selon une variante non représentée de l'invention, la hauteur de la jupe 11, prise parallèlement à l'axe $X_{11}$, peut être réduite.

La somme des aires des sections d'entrée $S_{121}$ représente une proportion importante de l'aire cumulée des surfaces 113 et 122 avant réalisation des ouvertures 121, ce qui assure que le débit de l'écoulement $E_1$ est suffisant pour combler les turbulences dans la zone $Z_2$. En pratique, la somme des aires des sections $S_{121}$ est supérieure ou égale à 25%, de préférence à 50%, de l'aire cumulée des surfaces 113 et 122.

Dans le second mode de réalisation de l'invention représenté à la figure 8, les éléments analogues à ceux du premier mode de réalisation portent les mêmes références. L'organe ou pointe 10 de ce mode de réalisation comprend également une paroi 12 pourvue de quatre ouvertures 121 de déviation d'un écoulement transitant par la roue vers le volume interne $V_{10}$ de l'organe 10. Quatre ailettes sont prévues, avec la même géométrie et la même fonction que celles du premier mode de réalisation. L'organe 10 est équipé de quatre obturateurs 16 qui peuvent tourner autour de l'axe central $X_{11}$ de la jupe 11, comme représenté par les flèches $F_{16}$ à la figure 8, pour venir obturer totalement ou partiellement les ouvertures 121 et réguler ainsi l'écoulement secondaire $E_1$. Les obturateurs 16 peuvent être solidaires les uns des autres au voisinage du plafond de l'organe 10 et commandés en rotation autour de l'axe $X_{11}$ au moyen d'un servo-moteur disposé dans le volume $V_3$ du plafond de la roue, en appliquant, par exemple, une technique connue pour la manoeuvre des pales d'une turbine Kaplan.

En variante, les obturateurs 16 peuvent être commandés individuellement.

On peut en particulier prévoir que les obturateurs 16 ferment les ouvertures 121 lorsque la roue 1 fonctionne en régime nominal. En effet, à ce régime la formation de turbulences est normalement minimisée par la géométrie des aubes 2.

Pour le reste, l'organe 10 de ce mode de réalisation fonctionne comme le précédent et présente les mêmes avantages, notamment en termes d'efficacité et de compacité axiale, ce qui est dû à l'action des ailettes 15.

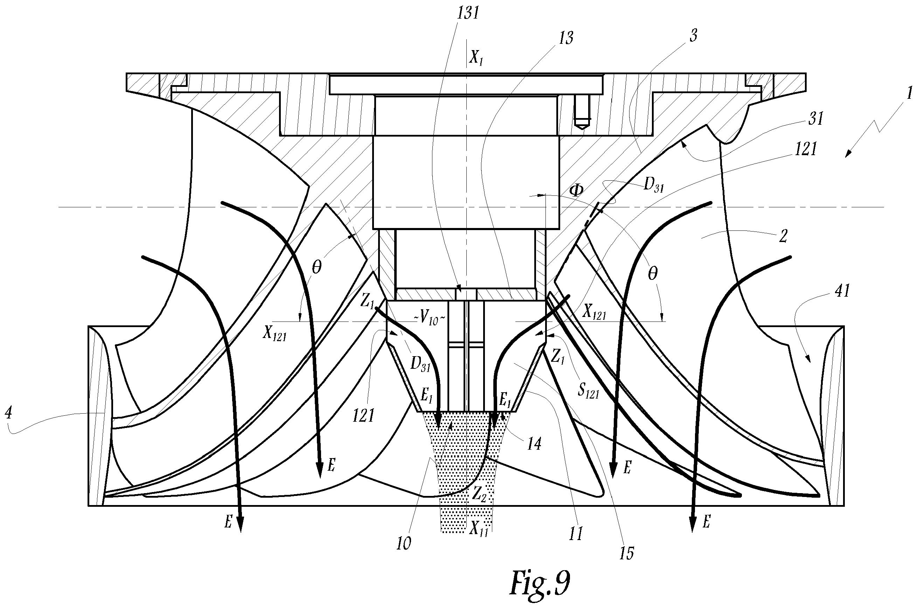

Dans le mode de réalisation de l'invention représenté aux figures 9 à 12, les éléments analogues à ceux du premier mode de réalisation portent les mêmes références. Une roue de turbine Francis 1 comprend des aubes 2 disposées entre les surfaces mouillées respectives 31 et 41 d'un plafond 3 et d'une ceinture 4. L'organe 10 de ce mode de réalisation comprend également un plafond 13 percé d'une ouverture 131 de passage d'un moyen de fixation sur la roue 1. L'organe 10 est pourvu d'une jupe 11 tronconique et convergente à l'opposé du plafond 13. Quatre ailettes 15, disposées à 90° autour de l'axe de symétrie $X_{11}$ de la jupe 11, relient cette jupe au plafond 13, en maintenant un écart entre le bord supérieur 111 de la jupe 11 et le bord radial externe 132 du plafond 13 qui est en forme de disque. Il est ainsi constitué une ouverture 121 qui s'étend sur sensiblement toute la circonférence de l'organe 10, en étant seulement interrompue tous les 90° par un bord radial externe 151 d'une ailette 15, qui forme un bord d'attaque.

Comme dans le premier mode de réalisation, les ailettes 15 se prolongent jusqu'au niveau de l'ouverture 14 de sortie de l'écoulement $E_1$ par rapport à l'organe 10. Chaque ailette 14 a un bord de fuite 152 qui s'étend, à partir du bord libre inférieur 112 de la jupe 11 qui délimite l'ouverture 14, radialement en direction de l'axe $X_{11}$ auquel il est perpendiculaire. Les ailettes ont chacune un bord 153 parallèle à l'axe $X_{11}$ et qui s'étend entre le plafond 13 et le bord 152.

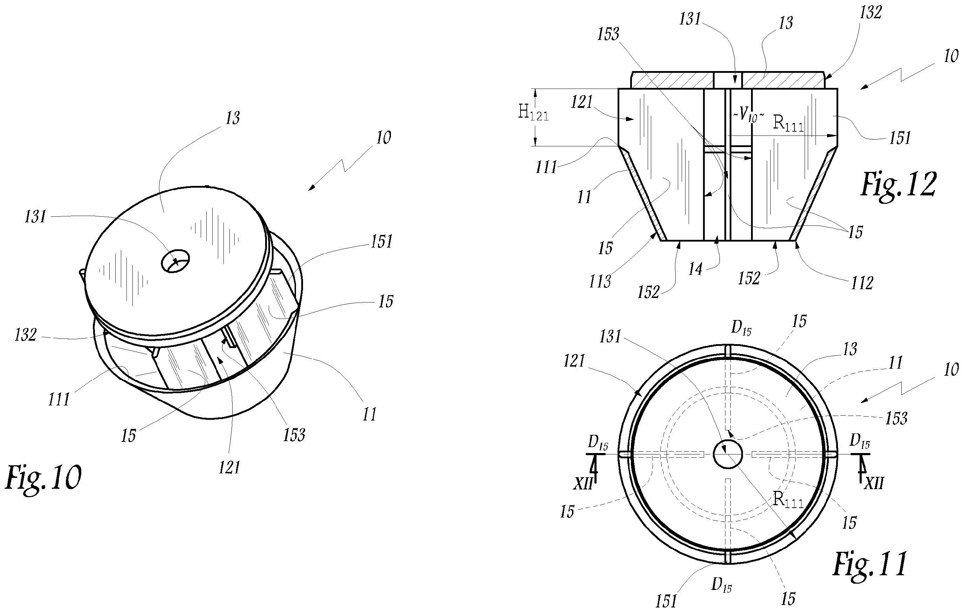

Comme précédemment, on note $S_{121}$ la section d'entrée d'une ouverture 121. Cette section d'entrée est annulaire, sauf au niveau des bords 151 et sa trace dans le plan des figures 9 et 12 est confondue avec les bords 151 des ailettes 15. En variante, la section $S_{121}$ peut être tronconique.

On note $X_{121}$ un axe central d'une des quatre portions de l'ouverture 121 définie entre deux ailettes 15. On note comme précédemment $D_{31}$ une droite prolongeant la surface mouillée 31 vers l'aval, c'est-à-dire en direction de l'axe $X_1$, dans le plan de coupe axiale de la figure 9. L'ange $\theta$ entre la droite $D_{31}$ et la projection d'un axe $X_{121}$ dans le plan méridien de la figure 9 est aigu, avec une valeur de l'ordre de 70°. En pratique, la valeur de l'angle $\theta$ peut être choisie entre 30° et 80°.

La section d'entrée $S_{121}$ de l'ouverture 121 forme un angle $\phi$ non nul avec la droite $D_{31}$.

Comme précédemment, on note 113 la surface externe de la jupe 11. Cette surface est destinée à être disposée globalement dans le prolongement de la surface mouillée 31 du plafond 3, en étant décalée vers le bas par rapport à celle-ci. L'ouverture 121 permet, de par son orientation qui découle de la valeur de l'angles $\theta$ et $\phi$, de diriger en fonctionnement, une partie $E_1$ d'un écoulement E transitant par la roue 1 vers le volume interne $V_{10}$ de l'organe 10. L'ouverture 121 permet donc de dévier efficacement une partie de l'écoulement E pour former un écoulement secondaire $E_1$ passant par le volume $V_{10}$. Cet écoulement secondaire $E_1$, peut alors sortir du volume $V_{10}$ par une ouverture axiale 14 délimitée par le bord inférieur 112 de la jupe 11, de façon à combler une zone équivalente à la zone $Z_2$, dans laquelle sont susceptibles de se former des turbulences. L'écoulement secondaire $E_1$ est globalement dirigé parallèlement à l'axe $X_1$ en sortie de l'organe 10. La valeur de l'angle $\phi$ contribue également à ce résultat.

Une fois l'écoulement secondaire $E_1$ dévié dans le volume $V_{10}$, les ailettes 15 agissent sur cet écoulement sensiblement comme celles du premier mode de réalisation et le dévient en direction de l'ouverture de sortie 14, en lui donnant une composante azimutale.

Dans ce mode de réalisation, les ailettes 15 sont planes et orientées selon des directions $D_{15}$ radiales par rapport à l'axe $X_{11}$ dans le plan de la figure 11. Elles peuvent toutefois avoir d'autres géométries et d'autres orientations.

Dans ce mode de réalisation, les ailettes 15 relient la jupe 11 et plafond 13 sans utilisation d'une paroi telle que la paroi 12 du premier mode de réalisation. Les ailettes 15 jouent, en plus de leur fonction de déviation de l'écoulement secondaire $E_1$, le rôle de bras de liaison entre les parties 11 et 13 de l'organe 10.

Selon une variante non représentée de l'invention, la hauteur $H_{121}$ de l'ouverture 121, prise parallèlement à la l'axe de symétrie $X_{11}$ de la jupe 11 qui est confondu avec l'axe $X_1$ en configuration montée de l'organe 10, est variable en fonction du point de fonctionnement de la turbine. Ainsi, la distance entre le bord supérieur 111 de la jupe 11 et le bord 132 du plafond 13 peut être ajustée par un servo-moteur, du même type que ceux utilisés pour régler les pales d'une turbine Kaplan.

L'aire de la section $S_{121}$ est approximativement égale à

$$2 * \pi * R_{111} * H_{121}$$

où $R_{111}$ est le rayon du bord 111. Cette aire représente environ 50% de l'aire de la surface externe 113 de la jupe 11, ce pourcentage étant éventuellement variable si la hauteur $H_{121}$ est réglable. En fonction des choix de conception de l'organe 10, ce pourcentage est compris entre 20 et 80%.

Selon un autre aspect de l'invention, également non représenté et qui concerne tous les modes de réalisation, l'une des ailettes 15 ou plusieurs d'entre elles peuvent être prévues mobiles par rapport à la jupe 11. Ceci permet d'adapter leur action sur l'écoulement $E_1$ au point de fonctionnement de la roue 1.

Quel que soit le mode de réalisation considéré, le nombre des ailettes 15 peut être choisi en fonction des conditions d'utilisation de la pointe 10. Il peut être égal à un et inférieur ou supérieur à quatre.

Selon une autre variante non représentée de l'invention applicable à tous les modes de réalisation, les ailettes 15 peuvent être jointives dans la portion centrale du volume interne $V_{10}$ de l'organe 10. En d'autres termes, les ailettes peuvent se rejoindre, leur bords 153 étant alors confondus. Elles forment alors des canaux parallèles de circulation de l'écoulement secondaire $E_1$ vers l'ouverture 14.

Un organe conforme à l'invention peut être monté sur une roue équipant une turbine-pompe. En cas d'utilisation en mode pompe, l'écoulement a lieu dans le sens inverse de celui représenté par les flèches E et $E_1$ sur les figures et il est important de pouvoir obturer les ouvertures 121 lorsque la roue est condition de fonctionnement optimal, comme expliqué en référence au second mode de réalisation.

L'invention a été représentée avec des organes 10 pourvus d'un plafond 13 de montage sur une roue 1. Un tel plafond n'est pas obligatoire et peut être remplacé par d'autres parties de liaison au plafond ou au moyeu de la roue, par exemple une bride, ouverte ou non.

L'invention a été représentée avec un organe 10 boulonné sur le plafond 3 d'une roue. Un tel organe peut être rapporté d'une façon différente sur la roue, par exemple soudé.

L'invention a été représentée avec un organe 10 prévu pour être rapporté sur le plafond d'une roue 1. Elle est également applicable au cas où un organe formant pointe fait partie intégrante de la roue 1, en étant monobloc avec le plafond 3 qu'il prolonge. L'organe formant pointe est également applicable aux roues de type hélice qui peuvent être considérées comme des roues de type Francis particulières dépourvues de ceinture et dans lesquelles les aubes tournent en regard d'un carter fixe. Cette combinaison ne fait pas partie de l'invention.

**Revendications**

1. Roue (1) de type Francis pour turbine ou turbine-pompe hydraulique, cette roue comprenant plusieurs aubes (2) disposées sur un plafond (3) et un organe (10) formant pointe rapporté sur une zone centrale (32) du plafond ou moyeu de la roue, radialement à l'intérieur des aubes, le plafond définissant une surface mouillée (31) de guidage d'un écoulement (E) passant entre les aubes et l'organe formant pointe étant pourvu d'au moins une ouverture (121) configurée de manière à dévier une partie ($E_1$) de l'écoulement vers le volume interne ($V_{10}$) de l'organe, alors que l'organe formant pointe (10) comprend une jupe annulaire tronconique (11), qui entoure le volume interne de l'organe vers lequel est déviée la partie de l'écoulement ($E_1$), la roue comprenant au moins une ailette (15) disposée dans le volume interne ($V_{10}$) de l'organe, **caractérisé en ce que** l'ailette (15) s'étend jusqu'au bord libre (112) de la jupe (11) qui est opposé au plafond et qui délimite une ouverture (14) de sortie de l'organe (10) pour la partie d'écoulement ($E_1$) déviée vers le volume interne ($V_{10}$) et **en ce que** l'ailette est configurée de manière à modifier le trajet de la partie d'écoulement ($E_1$) pénétrant dans ce volume interne par la ou les ouvertures (121) de déviation de l'écoulement (E).

2. Roue selon la revendication 1, **caractérisé en ce que** la ou chaque ailette (15) est pourvue d'un bord de fuite (152) qui s'étend, à partir du bord (112) de la jupe (11) délimitant l'ouverture de sortie (14), en direction de l'axe ($X_1$) de rotation de la roue (1) et qui est perpendiculaire à cet axe.

3. Roue selon l'une des revendications précédentes, **caractérisée en ce que** le bord (112) de la jupe (11) est situé au-dessus du bord inférieur (42) de la ceinture (4) de la roue, de préférence au-dessus des points d'attache inférieurs (22) des aubes (2) sur la ceinture (4).

4. Roue selon l'une des revendications précédentes, **caractérisée en ce que** le ou les seuls organes agissant sur la partie d'écoulement ($E_1$) à l'intérieur du volume interne ($V_{10}$) de l'organe (10) est ou sont formés par la ou les ailettes (15).

5. Roue selon l'une des revendications précédentes, **caractérisée en ce que** chaque ailette (15) est pourvue d'un bord libre (153) sensiblement parallèle à l'axe ($X_1$) de rotation de la roue (1).

6. Roue selon l'une des revendications 1 à 4, **caractérisée en ce que** les ailettes (15) sont jointives dans une portion centrale du volume interne ($V_{10}$) de l'organe (10).

7. Roue selon l'une des revendications précédentes, **caractérisée en ce que** et **en ce que** la projection, dans un plan méridien par rapport à l'axe de rotation ($X_1$) de la roue, d'un axe central ($X_{121}$) de l'ouverture (121) forme un angle aigu ($\theta$) avec une droite ($D_{31}$) prolongeant vers l'aval la surface mouillée (31) du plafond (3), dans le même plan et en direction de l'axe de rotation ($X_1$).

8. Roue selon la revendication 7, **caractérisée en ce que** l'angle ($\theta$) entre l'axe central ($X_{121}$) et la droite ($D_{31}$) est inférieur à 80°, de préférence inférieur à 60°.

**9.** Roue selon l'une des revendications précédentes, **caractérisée en ce que** la ou chaque ailette (15) relie la jupe (11) à une partie (13) de liaison de l'organe (10) avec le plafond ou le moyeu de la roue (1).

**10.** Roue selon l'une des revendications précédentes, **caractérisée en ce que** la ou chaque ailette (15) s'étend globalement selon une direction ($D_{15}$) radiale par rapport à un axe central ($X_{11}$) de la jupe (11).

**11.** Roue selon l'une des revendications précédentes, **caractérisée en ce que** l'ailette ou l'une au moins des ailettes (15) est mobile par rapport à la jupe (11).

**12.** Roue selon l'une des revendications précédentes, **caractérisée en ce qu'**il comprend des moyens (16) d'obturation sélective ($F_{16}$) d'au moins une ouverture (121) de déviation de l'écoulement.

**13.** Roue selon l'une des revendications précédentes, **caractérisée en ce que** la ou chaque ouverture de déviation (121) est formée dans une paroi (12) cylindrique ou tronconique de l'organe formant pointe (10).

**14.** Roue selon l'une des revendications précédentes, **caractérisée en ce que** la ou chaque ouverture de déviation d'écoulement (121) est allongée, avec sa plus grande dimension ($D_{121}$) inclinée d'un angle ($\alpha$) compris entre -90° et 90° par rapport à un axe central ($X_{11}$) de l'organe (10) formant pointe, cet angle étant de préférence compris entre -75° et -5° ou entre 5° et 75°.

**15.** Roue selon l'une des revendications 1 à 12, **caractérisée en ce que** l'ouverture (121) de déviation d'écoulement s'étend sur sensiblement toute la circonférence de l'organe (10), entre une jupe (11) et une partie (13) de liaison de l'organe avec le plafond (3) ou le moyeu de la roue.

**16.** Roue selon la revendication 15, **caractérisée en ce que** la position ($H_{121}$) de la jupe (11) par rapport au plafond (3) ou au moyeu de la roue (1) est réglable verticalement lorsque l'organe (10) est en place sur la roue.

**17.** Roue selon l'une des revendications précédentes, **caractérisée en ce que** l'aire totale de la ou des sections d'entrée ($S_{121}$) de la ou des ouvertures (121) de déviation d'écoulement est supérieure ou égale à 25%, de préférence à 50%, de l'aire de la surface extérieure (113, 122) de l'organe formant pointe (10).

**18.** Procédé de réduction de fluctuations dans un écoulement (E) interagissant avec une roue de machine hydraulique, **caractérisé en ce qu'**il consiste à faire pénétrer une partie ($E_1$) de cet écoulement dans le volume interne ($V_{10}$) d'un organe (10) formant pointe appartenant à une roue (1) selon l'une des revendications 1 à 17 à travers sa ou ses ouvertures (121) de déviation d'écoulement, à modifier le trajet de l'écoulement grâce aux ailettes (15) de l'organe et à faire sortir cette partie d'écoulement de cet organe à travers une ouverture axiale (14), de telle sorte que cette partie d'écoulement ($E_1$) est dirigée, en sortie de l'organe, à l'intérieur d'un volume globalement cylindrique ($Z_2$) d'axe parallèle à un axe ($X_1$) de rotation de la roue.

**Patentansprüche**

**1.** Rad (1) des Typs Francis für Turbine oder hydraulische Turbinenpumpe, wobei dieses Rad mehrere Schaufeln (2) umfasst, die an einer Decke (3) angeordnet sind und ein eine Spitze formendes Element (10), das in einem zentralen Bereich (32) der Decke beigebracht ist, oder Radnabe radial im Inneren der Schaufeln, wobei die Decke eine feuchte Oberfläche (31) zur Führung eines Ablaufs (E) definiert, der zwischen den Schaufeln verläuft und das eine Spitze formende Element mit mindestens einer Öffnung (121) versehen ist, die so konfiguriert ist, dass ein Teil ($E_1$) des Ablaufs zum internen Volumen ($V_{10}$) des Elements umgeleitet wird, während das eine Spitze formende Element (10) eine ringförmige kegelstumpfförmige (11) Schürze umfasst, die das interne Volumen des Elements umgibt, zu dem der Teil ($E_1$) des Ablaufs umgeleitet wird, wobei das Rad mindestens eine Rippe (15) umfasst, die im internen Volumen ($V_{10}$) des Elements angeordnet ist, **dadurch gekennzeichnet, dass** sich die Rippe (15) bis zur freien Kante (112) der Schürze (11) erstreckt, der sich gegenüber der Decke befindet und eine Ausgangsöffnung (14) des Elements (10) für den Teil ($E_1$) des Ablaufs begrenzt, der zum internen Volumen ($V_{10}$) umgeleitet wird, und dadurch, dass die Rippe so konfiguriert ist, dass die Bahn des Teils ($E_1$) des Ablaufs geändert wird, der dort oder über die Umleitungsöffnungen (121) des Ablaufs (E) in dieses interne Volumen eindringt.

**2.** Rad nach Anspruch 1, **dadurch gekennzeichnet, dass** die oder jede Rippe (15) mit einer Hinterkante (152) versehen ist, die sich von der Kante (112) der Schürze (11), die die Ausgangsöffnung (14) begrenzt, in Richtung der Drehachse ($X_1$) des Rads (1) erstreckt und senkrecht zu dieser Achse verläuft.

**3.** Rad nach einem der vorstehenden Ansprüche, **dadurch gekennzeichnet, dass** sich die Kante (112) der Schürze (11) über dem unteren Rand (42) der Umreifung (4) des Rads, vorzugsweise über den unteren Befestigungspunkten (22) der Schaufeln (2) an der Umreifung (4), befindet.

4. Rad nach einem der vorstehenden Ansprüche, **dadurch gekennzeichnet, dass** das oder die einzigen Elemente, die im Inneren des internen Volumens $(V_{10})$ des Elements (10) auf den Teil $(E_1)$ des Ablaufs einwirken durch die Rippe oder Rippen (15) geformt ist oder sind.

5. Rad nach einem der vorstehenden Ansprüche, **dadurch gekennzeichnet, dass** jede Rippe (15) mit einer freien Kante (153) versehen ist, die im Wesentlichen parallel zur Drehachse $(X_1)$ des Rads (1) verläuft.

6. Rad nach einem der Ansprüche 1 bis 4, **dadurch gekennzeichnet, dass** die Rippen (15) in einem zentralen Teil des internen Volumens $(V_{10})$ des Elements (10) aneinanderstoßend sind.

7. Rad nach einem der vorstehenden Ansprüche, **dadurch gekennzeichnet, dass** die Projektion, in einer Längsschnittebene bezüglich der Drehachse $(X_1)$ des Rads, einer zentralen Achse $(X_{121})$ der Öffnung (121) einen spitzen Winkel $(\theta)$ mit einer Geraden $(D_{31})$ formt, die die feuchte Oberfläche (31) der Decke (3) in derselben Ebene und in Richtung der Drehachse $(X_1)$ nachgelagert fortsetzt.

8. Rad nach Anspruch 7, **dadurch gekennzeichnet, dass** der Winkel $(\theta)$ zwischen der zentralen Achse $(X_{121})$ und der Geraden $(D_{31})$ weniger als 80°, vorzugsweise weniger als 60°, beträgt.

9. Rad nach einem der vorstehenden Ansprüche, **dadurch gekennzeichnet, dass** die Rippe oder jede Rippe (15) die Schürze (11) mit einem Verbindungsteil (13) des Elements (10) mit der Decke oder der Nabe des Rads (1) verbindet.

10. Rad nach einem der vorstehenden Ansprüche, **dadurch gekennzeichnet, dass** die Rippe oder jede Rippe (15) sich generell in einer radialen Richtung $(D_{15})$ bezüglich einer zentralen Achse $(X_{11})$ der Schürze (11) erstreckt.

11. Rad nach einem der vorstehenden Ansprüche, **dadurch gekennzeichnet, dass** die Rippe oder mindestens eine der Rippen (15) bezüglich der Schürze (11) mobil ist.

12. Rad nach einem der vorstehenden Ansprüche, **dadurch gekennzeichnet, dass** es Mittel (16) zur selektiven Abdeckung $(F_{16})$ mindestens einer Umleitungsöffnung (121) des Ablaufs umfasst.

13. Rad nach einem der vorstehenden Ansprüche, **dadurch gekennzeichnet, dass** die oder jede Umleitungsöffnung (121) in einer zylinderförmigen oder kegelstumpfförmigen Wand (12) des Elements geformt ist, das die Spitze (10) bildet.

14. Rad nach einem der vorstehenden Ansprüche, **dadurch gekennzeichnet, dass** die oder jede Umleitungsöffnung (121) des Ablaufs länglich ist, mit ihrer größten Abmessung $(D_{121})$ geneigt in einem Winkel $(\alpha)$ zwischen -90° und 90° bezüglich einer zentralen Achse $(X_{11})$ des die Spitze formenden Element (10), wobei dieser Winkel vorzugsweise zwischen -75° und -5° oder zwischen 5° und 75° beträgt.

15. Rad nach einem der Ansprüche 1 bis 12, **dadurch gekennzeichnet, dass** sich die Umleitungsöffnung (121) des Ablaufs im Wesentlichen über den gesamten Umfang des Elements (10) erstreckt, zwischen einer Schürze (11) und einem Verbindungsteil (13) des Elements mit der Decke (3) oder der Radnabe.

16. Rad nach Anspruch 15, **dadurch gekennzeichnet, dass** die Position $(H_{121})$ der Schürze (11) bezüglich der Decke (3) oder der Nabe des Rads (1) vertikal einstellbar ist, wenn das Element (10) am Rad angebracht ist.

17. Rad nach einem der vorstehenden Ansprüche, **dadurch gekennzeichnet, dass** der Gesamtbereich des oder der Eingangsabschnitte $(S_{121})$ der Umleitungsöffnung oder Umleitungsöffnungen (121) des Ablaufs größer oder gleich 25 %, vorzugsweise 50 %, des Bereichs der Außenoberfläche (113, 122) des die Spitze formenden Elements (10) beträgt.

18. Verfahren zur Reduzierung der Schwankungen in einem Ablauf (E), das mit einem Hydraulikmaschinenrad interagiert, **dadurch gekennzeichnet, dass** es darin besteht, einen Teil $(E_1)$ dieses Ablaufs in das interne Volumen $(V_{10})$ eines eine Spitze formenden Elements (10) eindringen zu lassen, das zu einem Rad (1) nach einem der Ansprüche 1 bis 17 gehört, über seine Umleitungsöffnung oder Umleitungsöffnungen (121) des Ablaufs, die Ablaufbahn dank der Rippen (15) des Elements zu ändern und diesen Ablaufteil über eine axiale Öffnung (14) aus diesem Element zu führen, sodass dieser Ablaufteil $(E_1)$ am Ausgang des Elements ins Innere eines im Allgemeinen zylindrisches Volumens $(Z_2)$ geleitet wird, dessen Achse parallel zu einer Drehachse $(X_1)$ des Rads verläuft.

**Claims**

1. A Francis-type wheel (1) for a turbine or hydraulic turbine pump, this wheel comprising several paddles (2) arranged on a ceiling (3) and a member (10) forming a peak returned on a central zone (32) of the ceiling or hub of the wheel, radially inside the paddles, the ceiling defining a wetted surface (31) for guiding a flow (E) passing between the paddles and the peak-forming member being provided with at least one opening (121) configured so as to deviate a part ($E_1$) of the flow towards the inner volume ($V_{10}$) of the member, whereas the peak-forming member (10) comprises a truncated annular sleeve (11), which surrounds the inner volume of the member towards which is deviated the part of the flow ($E_1$), the wheel comprising at least one blade (15) arranged in the inner volume ($V_{10}$) of the member, **characterised in that** the blade (15) extends until the free edge (112) of the sleeve (11) which is opposite the ceiling and which delimits an outlet opening (14) of the member (10) for the flow ($E_1$) part deviated towards the inner volume ($V_{10}$) and **in that** the blade is configured so as to modify the trajectory of the flow ($E_1$) part entering into this inner volume by the flow (E) deviation openings (121).

2. Wheel according to claim 1, **characterised in that** the or each blade (15) is provided with a trailing edge (152) which extends, from the edge (112) of the sleeve (11) delimiting the outlet opening (14), in the direction of the rotation axis ($X_1$) of the wheel (1) and which is perpendicular to this axis.

3. Wheel according to one of the preceding claims, **characterised in that** the edge (112) of the sleeve (11) is situated above the lower edge (42) of the girdle (4) of the wheel, preferably above the lower fastening points (22) of the paddles (2) on the girdle (4).

4. Wheel according to one of the preceding claims, **characterised in that** the only member(s) acting on the flow ($E_1$) part inside the inner volume ($V_{10}$) of the member (10) is or are formed by the blade(s) (15).

5. Wheel according to one of the preceding claims, **characterised in that** each blade (15) is provided with a free edge (153) substantially parallel to the rotation axis ($X_1$) of the wheel (1).

6. Wheel according to one of claims 1 to 4, **characterised in that** the blades (15) are integrated into a central portion of the inner volume ($V_{10}$) of the member (10).

7. Wheel according to one of the preceding claims, **characterised in that** the projection, in a meridian plane with respect to the rotation axis ($X_1$) of the wheel, a central axis ($X_{121}$) of the opening (121) forms an acute angle ($\theta$) with a straight line ($D_{31}$) extending downstream towards the wetted surface (31) of the ceiling (3), in the same plane and in the direction of the rotation axis ($X_1$).

8. Wheel according to claim 7, **characterised in that** the angle ($\theta$) between the central axis ($X_{121}$) and the straight line ($D_{31}$) is less than 80°, preferably less than 60°.

9. Wheel according to one of the preceding claims, **characterised in that** the or each blade (15) connects the sleeve (11) to a part for connecting (13) the member (10) with the ceiling or the hub of the wheel (1).

10. Wheel according to one of the preceding claims, **characterised in that** the or each blade (15) extends overall along a radial direction ($D_{15}$) with respect to a central axis ($X_{11}$) of the sleeve (11).

11. Wheel according to one of the preceding claims, **characterised in that** the blade or at least one of the blades (15) is mobile with respect to the sleeve (11).

12. Wheel according to one of the preceding claims, **characterised in that** it comprises means (16) for selectively blocking ($F_{16}$) at least one flow deviation opening (121).

13. Wheel according to one of the preceding claims, **characterised in that** the or each deviation opening (121) is formed in a cylindrical or truncated wall (12) of the peak-forming member (10).

14. Wheel according to one of the preceding claims, **characterised in that** the or each flow deviation opening (121) is extended, with the greatest dimension ($D_{121}$) thereof inclined by an angle ($\alpha$) of between -90° and 90° with respect to a central axis ($X_{11}$) of the peak-forming member (10), this angle being preferably between -75° and -5° or between 5° and 75°.

15. Wheel according to one of claims 1 to 12, **characterised in that** the flow deviation opening (121) extends over substantially the whole circumference of the member (10), between a sleeve (11) and a part (13) for connecting the member with the ceiling or the hub of the wheel.

16. Wheel according to claim 15, **characterised in that** the position ($H_{121}$) of the sleeve (11) with respect to the ceiling (3) or to the hub of the wheel (1) can be adjusted vertically when the member (10) is in place on the wheel.

17. Wheel according to one of the preceding claims, **characterised in that** the total area of the inlet section(s) ($S_{121}$) of the flow deviation opening(s) (121) is greater than or equal to 25%, preferably 50%, of the area of the outer surface (113, 122) of the peak-forming member (10).

**18.** Method for reducing fluctuations in a flow (E) interacting with a hydraulic machine wheel, **characterised in that** it consists of making a part ($E_1$) of this flow enter into the inner volume ($V_{10}$) of a peak-forming member (10) belonging to a wheel (1) according to one of claims 1 to 17 through the flow deviation opening(s) (121) thereof, to modify the trajectory of the flow using the blades (15) of the member and to make this flow part come out of this member through an axial opening (14), such that this flow part ($E_1$) is directed, coming out of the member, inside an overall cylindrical volume ($Z_2$) of axis parallel to a rotation axis ($X_1$) of the wheel.

*Fig.1*

*Fig.2*

*Fig.3*

Fig.4

Fig.5

Fig.6

*Fig.8*

*Fig.7*

*Fig.9*

Fig.12

Fig.11

Fig.10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005038243 A
- US 2758815 A
- JP 4072468 A
- FR 1162872 A